# EUROPÄISCHE PATENTSCHRIFT

(11) **EP 3 191 236 B1**
(45) Veröffentlichungstag und Bekanntmachung des Hinweises auf die Patenterteilung: **28.06.2023**
(21) Anmeldenummer: 15781851.9
(22) Anmeldetag: 09.09.2015
(51) Int. Cl.: B21D 5/00, B21D 5/02

(54) **BIEGEPRESSE UND VERFAHREN ZUM BIEGEN EINES WERKSTÜCKS MIT DER BIEGEPRESSE**
PRESS BRAKE AND A METHOD FOR BENDING A WORKPIECE WITH THE BENDING PRESS
PRESSE PLIEUSE ET PROCÉDÉ DE PLIAGE D'UNE PIÈCE À L'AIDE DE LA PRESSE PLIEUSE

(30) Priorität: 11.09.2014 AT 506322014
(43) Veröffentlichungstag der Anmeldung: 19.07.2017
(73) Patentinhaber: TRUMPF Maschinen Austria GmbH & Co. KG., 4061 Pasching (AT)
(72) Erfinder: DENKMEIER, Thomas, A-4050 Traun (AT)
(74) Vertreter: Burger, Hannes
(86) Internationale Anmeldenummer: PCT/AT2015/050223
(87) Internationale Veröffentlichungsnummer: WO 2016/037208

(56) Entgegenhaltungen:
- EP-A1- 1 118 399
- DE-U1- 29 713 318
- JP-A- H04 361 831
- JP-A- 2002 086 215

## Beschreibung

Die Erfindung betrifft eine Biegepresse gemäß Oberbegriff von Anspruch 1 und ein Verfahren zum Biegen eines Werkstückes mit einer Biegepresse.

Die JPH05185300A offenbart eine Werkzeugmaschine, die zwischen dem Presskopf und dem Stempel ein supermagnetostriktives Material aufweist, welches von einer Spule umgeben ist. Der magnetische Widerstand ändert sich mit dem Druck, sodass durch eine Messung der Stromvariation durch die Spule der Arbeitsdruck bestimmt werden kann.

Die JPH10249599A offenbart eine Presse, bei der eine Überbelastung des Werkstückes mittels eines Druckdetektors verhindert werden soll. Bei Überschreitung eines vorgegebenen Wertes wird die Werkzeugbewegung umgekehrt.

Die JPH04361831A offenbart eine Biegepresse, die im unteren Bereich des Tisches einen Drucksensor aufweist, um den hydraulischen Druck in einem Hauptzylinder zu messen. Ein Positionssensor misst die Position des unteren Tisches. Die Sensordaten werden in eine Koordinatentransformationsschaltung eingespeist, die Positions- und Druckinformationen an eine die Plattendicke betreffende arithmetische Korrekturschaltung ausgibt.

Die DE29713318U1 offenbart eine Winkelmeßeinrichtung für Biegemaschinen mit einer Kraftmesseinrichtung, die eine elastische Verformung eines am Biegevorgang direkt oder indirekt beteiligten Maschinenteils zumindest während eines Teils des Biegevorgangs erfaßt. Die Kraftmeßeinrichtung kann an einem Maschinengestell oder einem Maschinentisch oder alternativ an einem der Biegewerkzeuge vorgesehen sein. Zusätzlich ist das zu biegende Werkstück während des Biegevorgangs optisch erfaßbar.

Die EP1118399A1 offenbart im Zusammenhand mit einer Biegepresse eine Vorrichtung zur Messung des Biegewinkels eines Werkstückes. Im seitlichen oberen Bereich des Biegewerkzeuges ist ein Drucksensor angeordnet, der zur Messung und Kompensation der Rückfederung des Werkstückes verwendet wird.

Die JP2002086215A, die die Basis für die Oberbegriffe der Ansprüche 1 und 10 bildet, offenbart eine Biegepresse mit einer Vorrichtung, die ein Druckerfassungsmittel aufweist, welches in longitudinaler Richtung des Tisches seitlich angebracht ist. Mit einem Berechnungsmittel wird der Belastungszustand des Tisches auf der Basis der Druckverteilung in longitudinaler Richtung berechnet. Ein Korrekturmittel ist vorgesehen, um die Belastung auf der Basis eines angezeigten Belastungszustandes zu korrigieren.

Die im Stand der Technik bekannten Verfahren beschränken sich auf die Ermittlung eines Druckwertes. Eine solche Größe ist jedoch nicht aussagekräftig und eignet sich nicht zur optimierten Steuerung eines Biegevorganges und kann allenfalls dazu verwendet werden, einen vorgegebenen Grenzwert nicht zu überschreiten.

Das Ziel der vorliegenden Erfindung besteht darin, eine Biegepresse und ein Biegeverfahren bereitzustellen, die eine optimierte Steuerung des Biegevorganges ermöglichen. Die Art und Anordnung des Sensors soll einerseits möglichst detaillierte Rückschlüsse auf den Biegevorgang ermöglichen, andererseits eine platzsparende und einfache Konstruktion ermöglichen. In bevorzugter Ausführungsform soll die Biegepresse Aufschluss über verschiedene Aspekte des Biegevorganges geben. Der Aufbau der Biegepresse soll einfach und kostengünstig sein. Die Erfindung soll das Ermitteln zuverlässiger und reproduzierbarer Informationen über den Biegevorgang vorzugsweise unabhängig von der Art des Werkstückes gewährleisten.

Dieses Ziel wird mit einer Biegepresse, insbesondere einer Abkant- oder Gesenkbiegepresse, der eingangs genannten Art dadurch erreicht, dass der zumindest eine Sensor ein im Krafthauptfluss der Biegepresse angeordneter Drucksensor ist, der vorzugsweise mit einer der Werkzeugaufnahmen zusammenwirkt, und dass die Steuereinrichtung eine Datenverarbeitungseinrichtung umfasst, die dazu eingerichtet ist, um aus den Sensordaten des Drucksensors zumindest eine Eigenschaft des Werkstückes und/oder die durch den Biegevorgang bewirkte Verformung der Biegepresse zu ermitteln und dass der Drucksensor innerhalb der Werkzeughalterung oder zwischen der Werkzeughalterung und dem von der Werkzeughalterung gehaltenen Werkzeug oder zwischen der Werkzeughalterung und der die Werkzeughalterung tragenden Plattform angeordnet ist.

Die Erfindung beruht auf der Erkenntnis, dass aus den Sensordaten eines Kraft- oder Drucksensors, der vorzugsweise mit der Werkzeugaufnahme zusammenwirkt, konkrete Informationen betreffend das Werkstück und die Biegepresse auf genaue und zuverlässige Weise ermittelt werden können. Dazu kann die Datenverarbeitungseinrichtung einen Algorithmus enthalten, der in Abhängigkeit der Sensordaten als Eingangsgröße zumindest eine Ausgangsgröße generiert. Die Ausgangsgröße kann z.B. der aktuelle Biegewinkel des Werkstückes, die Dicke des Werkstückes, das Ausmaß der Verformung der Biegepresse während des Biegevorganges, insbesondere die Durchbiegung oder (Ständer)Aufweitung.

Zusätzliche (konstante oder variable) Parameter können bei der Berechnung der Werkstückeigenschaften von dem Algorithmus verwendet werden, wie z.B. die Bombierungseinstellungen der Biegepresse, die Art der Werkzeuge, etc. Üblicherweise wird zur Ermittlung der die Parameter betreffenden Datensätze zumindest ein Kalibriervorgang durchgeführt, insbesondere um die Toleranzen (Werkzeugform, Werkzeughöhe, usw.) zu kompensieren. Der Biegewinkel des Werkstückes wird vorzugsweise durch neuronale Netze errechnet.

Die Bombierung ist auf Biegemaschinen eigens zum Ausgleich der Deformationen von Tisch und Pressbalken implementiert. Sie erzeugt eine zur Plattform-(bzw. Tisch)durchbiegung entgegen gerichtete Wölbung. Mit dieser Bombiereinrichtung soll ein kontinuierlicher Biegewinkelverlauf entlang des gesamten Werkstücks sichergestellt werden.

Durch die Presskraft erfolgt auch eine Verformung der Biegepresse selbst. Insbesondere können sich Rahmenteile aufweiten, d.h. ein Abstand zwischen Rahmenteilen kann größer werden, während an anderer Stelle eine Durchbiegung erfolgt. Die Ausgangsgröße des Algorithmus kann nun z.B. der Abstand und/oder ein Winkelwert sein, der die Verformung der Biegepresse charakterisiert.

Die erfindungsgemäß ermittelte(n) Werkstückeigenschaft(en) und/oder Verformung der Biegepresse können zur optimierten Steuerung des Biegevorganges verwendet werden. Z.B. kann die ständige Überwachung des aktuellen Biegewinkels des Werkstückes während des Biegevorganges dazu benutzt werden, um die Krafteinleitung in das Werkstück in Abhängigkeit des Biegewinkels zeitlich und örtlich zu regeln. Insbesondere kann ein vorgegebener Biegewinkel des Werkstückes (im relaxierten, d.h. unbelasteten Zustand) präzise erreicht werden, wenn der aktuelle Biegewinkel (im belasteten Zustand) ständig überwacht wird. Um den Relaxationsvorgang (geringfügige Aufweitung des Werkstückes, wenn es vom belasteten in den nicht belasteten Zustand übergeht) zu kompensieren, wird das Werkstück in der Biegepresse zunächst um einen höheren Biegewinkel als schlussendlich erwünscht gebogen. Die Steuerung kann deswegen so genau erfolgen, weil die erfindungsgemäße Ermittlung verschiedener Parameter genau und zuverlässig erfolgt.

Die Werkzeughalterung ist bevorzugt eine Werkzeugklemmung, in der das Werkzeug (vorzugsweise zwischen zwei Klemmbacken bzw. Klemmleisten) eingeklemmt und dadurch in Position gehalten wird. Die Anordnung des Sensors insbesondere zwischen Werkzeugklemmung und Werkzeug ist hierbei besonders vorteilhaft, da der gesamte Verbund aus Werkzeugklemmung und Werkzeug unverrückbar zusammenhält, wodurch der Sensor in einer vorbestimmten Lage zuverlässig fixiert bzw. eingezwängt ist.

Wie bereits erwähnt ist die zumindest eine Eigenschaft des Werkstückes in einer bevorzugten Ausführungsform der durch den Biegevorgang bewirkte Biegewinkel. Der Sensor ist somit Bestandteil einer (Biege-)Winkelsensorik. Alternativ kann auch die Dicke des Werkstückes bestimmt werden. So kann der Biegevorgang optimal an das zu bearbeitende Werkstück angepasst werden, ohne dass der Bediener der Biegepresse die Werkstückeigenschaften mitteilen muss.

Als Kraft- bzw. Drucksensoren kommen unter anderem Dehnungsmessstreifen, piezoresistive Dehnungssensoren, kapazitive Sensoren, piezoelektrische (Druck-)Sensoren, (faser-)optische Sensoren, Magnetoelastische Sensoren, Kraftmessfolien, (DLC-)Dünnschichtsensoren, etc. in Frage.

Der Drucksensor ist innerhalb der Werkzeughalterung oder zwischen der Werkzeughalterung und dem von der Werkzeughalterung gehaltenen Werkzeug oder zwischen der Werkzeughalterung und der die Werkzeughalterung tragenden Plattform angeordnet. Mit dieser Maßnahme konnten besonders zuverlässige Bestimmungen der Werkstückeigenschaften, insbesondere des aktuellen Biegewinkels, erreicht werden. Außerdem ist die Anordnung des Sensors in der Werkzeughalterung besonders vorteilhaft, da die Werkzeughalterung nahe am Ort des Geschehens (Biegelinie) ist, im Gegensatz zu einem Werkzeug aber kaum ausgetauscht wird, sodass auch der Sensor nicht ständig (mit) ausgebaut oder durch einen anderen Sensor ersetzt werden muss. Ein ständiges Rüsten mit dem Sensor ist daher nicht erforderlich.

Die Anordnung des Sensors im Werkzeug selbst wird dadurch vermieden, was insbesondere wegen der festigkeitsspezifischen Werkzeugschwächung aufgrund notwendiger Anarbeitungen. Außerdem ist die vorliegende Lösung kostengünstiger, weil die Sensorfunktion nicht im Werkzeug selbst angesiedelt ist und eine Messung mit demselben Sensor bei allen Werkzeugen möglich ist.

Der Sensor ist ein Drucksensor, der im Krafthauptfluss der Biegepresse angeordnet ist. Diese Anordnung liefert besonders genaue und reproduzierbare Informationen über das Werkstück bzw. die Verformung der Biegepresse.

Besonders bevorzugt ist, wenn der Sensor ein piezoelektrischer Sensor ist. Diese Maßnahme gewährleistet eine präzise Messung mit hoher Auflösung und großem Messbereich. Ebenso ermöglicht die hohe zeitliche Auflösung eine gleichsam kontinuierliche Messung des Druckes. Eine Piezosensorik kann inklusive Schaltungen auf Metall gedruckt werden. Sie ist sehr preiswert und vor allem sehr energiearm.

In einer bevorzugten Weiterbildung ist der piezoelektrische Sensor flächig ausgebildet, wodurch sich eine platzsparende Lösung ergibt, mit der bestehende Biegepressen einfach aufgerüstet werden können. Bevorzugt ist dabei, wenn der piezoelektrische Sensor auf die Werkstückaufnahme aufgeklebt ist, z.B. auf einer zum Werkzeug gewandten Seite der Werkstückaufnahme.

Eine bevorzugte Ausführungsform zeichnet sich dadurch aus, dass der Sensor in einer Vertiefung oder Ausnehmung sitzt, insbesondere in einer Vertiefung oder Ausnehmung der Werkzeugaufnahme. In der Vertiefung/Ausnehmung ist der Sensor nicht nur vor äußeren Einflüssen (wie z.B. Schmutz, Staub, Feuchtigkeit, etc.) geschützt, sondern im Falle einer mit dem Sensor formgleichen Vertiefung/Ausnehmung auch in seiner Position arretiert. In letzterem Fall ist der Sensor formschlüssig in die Vertiefung bzw. Ausnehmung eingesetzt. Diese Ausführungsform verhindert eine Lageänderung des Sensors und damit Messungenauigkeiten.

Eine bevorzugte Ausführungsform zeichnet sich dadurch aus, dass der Sensor von der Werkzeugaufnahme umgeben ist und zumindest bei in die Werkzeugaufnahme eingesetztem Werkzeug von außen nicht sichtbar ist. Der Sensor ist dadurch bestmöglich geschützt und vor Beschädigung durch äußere Einflüsse (z.B. beim Einbringen der Werkstücke oder beim Wechseln der Werkzeuge) sicher.

Eine bevorzugte Ausführungsform zeichnet sich dadurch aus, dass die Abmessung des zumindest einen Drucksensors in einer Richtung, die senkrecht zur Pressrichtung und senkrecht zur Längserstreckung der Werkzeugaufnahme steht, kleiner, vorzugsweise höchstens halb so groß ist wie die Abmessung der Werkzeugaufnahme in derselben Richtung. Diese Maßnahme ermöglicht eine optimale Integration des Sensors in bzw. an die Werkzeugaufnahme. Der Sensor kann aufgrund seiner Abmessungen auch möglichst zentral in den Krafthauptfluss integriert werden, wodurch auch die Messgenauigkeit erhöht werden kann. Bei Verwendung mehrerer Sensoren wird auch die Ortsauflösung durch derart dimensionierte Sensoren erhöht.

Eine bevorzugte Ausführungsform zeichnet sich dadurch aus, dass die Biegepresse zumindest zwei, vorzugsweise mehrere Drucksensoren umfasst, die entlang der Längserstreckung der Werkzeugaufnahme (d.h. entlang der Biegelinie bzw. der sogenannten Z-Achse) voneinander beabstandet angeordnet sind. Dadurch kann insbesondere der Biegewinkel des Werkstückes ortaufgelöst bestimmt werden. Für jeden Sensor kann ein Biegewinkel ermittelt werden. Abweichungen von einem Idealwert können erfasst werden, wodurch einerseits Fehler im Maschinenaufbau erkannt, andererseits sofortige Maßnahmen, wie z.B. eine entsprechende (Nach)Regelung einer Kraftverteilungseinrichtung zur lageabhängigen Krafteinleitung, getroffen werden. Eine solche Kraftverteilungseinrichtung wird weiter unten näher beschrieben.

Die Sensordaten können sowohl als Eingangsgröße (des Algorithmus) zur Berechnung der Verformung der Biegepresse, als auch zur Ermittlung bzw. zur Korrektur der z.B. nur mit den Sensordaten eines Sensors ermittelten Biegewinkel herangezogen werden.

Die Kombination der beiden vorhergehenden Ausführungsformen ermöglicht die Erstellung einer zweidimensionalen Kraft- bzw. Druckverteilung (d.h. ortaufgelöst in zwei Raumrichtungen), die wiederum eine ortsaufgelöste Bestimmung von Werkstückeigenschaften bzw. Biegepressenverformungen in zwei Raumrichtungen ermöglicht.

Eine bevorzugte Ausführungsform zeichnet sich dadurch aus, dass die eine Plattform durch einen Maschinentisch und die andere Plattform durch einen Pressbalken gebildet wird und/oder dass das eine Werkzeug durch ein Oberwerkzeug und das andere Werkzeug durch ein Unterwerkzeug gebildet ist, wobei vorzugsweise ein Werkzeug durch eine Matrize und das andere Werkzeug durch einen Stempel gebildet ist. Die Biegepresse ist vorzugsweise eine Presse zum Biegen von plattenförmigen Werkstücken, insbesondere Metallblechen.

Das oben genannte Ziel wird auch mit einem Verfahren zum Biegen eines Werkstückes mit einer Biegepresse erreicht, wobei das Verfahren folgende Schritte umfasst: (a) Durchführung eines Biegevorganges durch relatives aufeinander zu Bewegen der Werkzeuge; (b) Messung der/des durch den Biegevorgang aufgebrachten Kraft und/oder Druckes mit dem Drucksensor; und (c) Ermittlung zumindest einer Eigenschaft des Werkstückes und/oder der durch den Biegevorgang bewirkten Verformung der Biegepresse aus den Sensordaten des Drucksensors.

Wie bereits zuvor erwähnt macht sich die Erfindung die Erkenntnis zunutze, dass aus den Sensordaten konkrete Informationen über das Werkstück bzw. die Biegepresse präzise und zuverlässig ermittelt werden können. Diese Informationen können genutzt werden, um die Biegepresse in Abhängigkeit dieser Informationen zu steuern.

Vorzugsweise ist eine im Schritt (c) ermittelte Eigenschaft des Werkstückes der durch den Biegevorgang bewirkte Biegewinkel des Werkstückes.

Vorzugsweise ist eine im Schritt (c) ermittelte Eigenschaft des Werkstückes die Dicke des Werkstückes.

Eine bevorzugte Ausführungsform zeichnet sich dadurch aus, dass die Messung der Kraft oder des Druckes mit dem Drucksensor während des gesamten Biegevorganges durchgehend erfolgt. Dabei kann eine kontinuierliche bzw. gleichsam kontinuierliche Messung oder eine intermittierende Messung (d.h. in vorgegebenen Zeitintervallen) erfolgen. Die Überwachung des gesamten Biegevorganges und evtl. (Nach)Steuerung des Biegevorganges in Abhängigkeit der ermittelten Größen führt zu optimalen Biegeergebnissen.

Eine bevorzugte Ausführungsform zeichnet sich dadurch aus, dass die Durchführung des Schrittes (c) mittels eines Algorithmus erfolgt, der in Abhängigkeit von zumindest einer Eingangsgröße die zumindest eine Eigenschaft des Werkstückes und/oder die Verformung der Biegepresse ermittelt, wobei vorzugsweise der Algorithmus auf zumindest einen gespeicherten Datensatz zurückgreift, die jedem Wert der zumindest einen Eigenschaft des Werkstückes und/oder der Verformung der Biegepresse eine Eingangsgröße oder eine aus der zumindest einen Eingangsgröße abgeleitete Zwischengröße zuordnet. Die Datensätze können aus Test- oder Kalibriermessungen ermittelt werden und ermöglichen eine schnelle Zuordnung der Werte. Der Algorithmus kann auch mehrere Datensätze heranziehen, die mehrfache Abhängigkeiten widerspiegeln. Auch können mehrdimensionale Datensätze bereitgestellt werden.

Eine bevorzugte Ausführungsform zeichnet sich dadurch aus, dass der Algorithmus zusätzlich zu den Sensordaten des Drucksensors die relative Lage der Werkzeuge zueinander, insbesondere die Eintauchtiefe, als Eingangsgröße zur Ermittlung der zumindest einen Eigenschaft des Werkstückes und/oder der Verformung der Biegepresse heranzieht. Dies ermöglicht einerseits eine noch genauere und zuverlässigere Bestimmung einer Werkstückeigenschaft bzw. Biegepressenverformung, andererseits die Ermittlung zweier verschiedener Werkstückeigenschaften, z.B. Biegewinkel, Dicke, Materialeigenschaften, etc.

Bevorzugt wird die relative Lage der Werkzeuge zueinander durch einen gesonderten (d.h. vom Kraft- oder Drucksensor unabhängigen) Sensor oder Messwertgeber ermittelt. Dieser kann insbesondere ein optischer, mechanischer oder induktiver Sensor oder Messwertgeber sein. Er könnte auch die Position des Kolbens im Presszylinder (der auf die Plattform wirkt) bzw. das Ausfahren der Kolbenstange detektieren bzw. überwachen.

Eine bevorzugte Ausführungsform zeichnet sich dadurch aus, dass im Schritt (c) jener Biegewinkel ermittelt wird, den das Werkstück in dem durch die Werkzeuge belasteten Zustand aufweist.

Eine bevorzugte Ausführungsform zeichnet sich dadurch aus, dass im Schritt (c) jener Biegewinkel ermittelt wird, den das gebogene Werkstück im relaxierten Zustand annimmt. Hier kann unmittelbar rückgeschlossen werden, in welchem Ausmaß der Biegevorgang noch fortgesetzt werden muss, um den Winkel, um den das Werkstück nach Wegfall der Belastung relaxiert, zu kompensieren.

Eine bevorzugte Ausführungsform zeichnet sich dadurch aus, dass zur Ermittlung des Biegewinkels im relaxierten Zustand des gebogenen Werkstückes die relative Lage der Werkzeuge, insbesondere die Eintauchtiefe, in jener Position herangezogen wird, in der die/der von den Werkzeugen auf das Werkstück ausgebübte Kraft oder Druck gegen Null geht oder zumindest ein Werkzeug den Berührkontakt mit dem gebogenen Werkstück verliert. Dieses Verfahren liefert besonders genaue Werte und erlaubt die zuverlässige Feststellung, ob ein Werkstück tatsächlich ausreichend gebogen wurde, oder noch korrigiert werden muss.

Eine bevorzugte Ausführungsform zeichnet sich dadurch aus, dass das Erreichen dieser Position mittels der Sensordaten des Kraft- oder Drucksensors festgestellt wird. Da der steile Druckabfall (auf Null) mit dem erfindungsgemäßen Sensor sehr genau registrierbar ist, stellt dieses Verfahren eine zuverlässige Referenz dar.

Eine bevorzugte Ausführungsform zeichnet sich dadurch aus, dass die Biegepresse zumindest zwei Kraft- oder Drucksensoren aufweist und dass aus den Sensordaten der zumindest zwei Kraft- oder Drucksensoren je ein Biegewinkel ermittelt wird. Dadurch können wir bereits weiter oben beschrieben ortsaufgelöste Informationen erhalten werden.

Eine bevorzugte Ausführungsform zeichnet sich dadurch aus, dass die Steuerung des Biegevorgangs in Abhängigkeit der ermittelten Eigenschaft des Werkstückes und/oder Verformung der Biegepresse erfolgt. Dies liefert optimierte Biegeergebnisse.

Eine bevorzugte Ausführungsform zeichnet sich dadurch aus, dass bei einer Abweichung des ermittelten Biegewinkels von einem Soll-Wert die Biegepresse eine Aktion setzt, insbesondere eine Ausgabe der Abweichung und/oder des ermittelten Biegewinkels an einer Ausgabeschnittstelle, insbesondere einem Display, oder ein Speichern der Abweichung und/oder des ermittelten Biegewinkels in einem Speicher.

Eine bevorzugte Ausführungsform, bei dem die Biegepresse zumindest zwei, vorzugsweise mehrere Kraft- oder Drucksensoren umfasst, die entlang der Längserstreckung der Werkzeugaufnahme voneinander beabstandet angeordnet sind, zeichnet sich dadurch aus, dass die Biegepresse eine Kraftverteilungseinrichtung zur lageveränderlichen Krafteinleitung entlang der Biegelinie aufweist, insbesondere eine Abwälzeinrichtung zur punktuellen Krafteinleitung, und dass die Steuerung der Kraftverteilungseinrichtung in Abhängigkeit von den Sensordaten der entlang der Längserstreckung der Werkzeugaufnahme verteilten Kraft- oder Drucksensoren erfolgt.

Eine Kraftverteilungseinrichtung zur lageveränderlichen Krafteinleitung entlang der Biegelinie ermöglicht, den Ort der Krafteinleitung bzw. das Ausmaß der Krafteinleitung an einer bestimmten Position entlang der Biegelinie zu variieren. Ein Beispiel für eine solche Kraftverteilungseinrichtung wäre eine sogenannte Abwälzeinrichtung. Hier erfolgt eine mehr oder weniger punktuelle Krafteinleitung mit Hilfe einer Abwälzbewegung der oberen Plattform (des Pressbalkens) entlang der unteren Plattform (Maschinentisch).

Für diese Abwälzbewegung des Pressbalkens wird zusätzlich zu dem/den Antriebe(n), insbesondere zwei Antrieben, für vertikale Bewegungen des Pressbalkens noch ein weiterer Antrieb für horizontale Bewegungen des Pressbalkens vorgesehen. Dadurch ergeben sich anstelle von nur zwei Freiheitsgraden drei Freiheitsgrade, in deren Richtung der Pressbalken bewegt werden kann. Durch einen Radius an der Unterseite des Pressbalkens erreicht man die Reduzierung der gesamten Balkenlänge auf einen einzelnen Punkt. Dieser Punkt kann nun mit Hilfe entsprechender Ansteuerung der (drei) Antriebe über die gesamte Länge der Maschine geführt werden. Durch die punktuelle Eingriffsmöglichkeit kann kräfteeffizienter gebogen werden. Die notwendige Presskraft lässt sich um bis zu 30% reduzieren, da sie nicht mehr zeitgleich über die gesamte Werkstücklänge aufgebracht werden muss. Außerdem kann im Gegensatz zum Stand der Technik die Eintauchtiefe des Oberwerkzeugs in das Unterwerkzeug und somit in das Werkstück für jeden Punkt individuell beeinflusst werden.

Diese individuelle Beeinflussung erfolgt gemäß vorliegender Ausführungsform in Abhängigkeit der aus den Sensordaten des Kraft- oder Drucksensors ermittelten Werkstückeigenschaften (Biegewinkel, Dicke, Materialeigenschaften, etc.). Der Biegevorgang wird somit entlang der gesamten Biegelinie optimiert.

Ein Aspekt der Erfindung betrifft auch ein Verfahren zum Biegen eines Werkstückes mit einer Biegepresse, gekennzeichnet durch die Schritte: (a) Durchführung eines Biegevorganges durch relatives aufeinander zu Bewegen zweier Werkzeuge; (b) Messung der/des auf ein Werkzeug und/oder auf eine das Werkzeug haltende Werkzeughalterung einwirkenden Kraft und/oder Druckes vor, während und/oder nach dem Biegevorgang mit einem Kraft- oder Druck-sensor; (d) Auswertung der Sensordaten des Kraft- oder Drucksensors im Hinblick auf eine unerwünschte Kollision eines Werkzeuges oder einer Werkzeughalterung mit einem falsch eingesetzten Werkzeug, einem Gegenstand oder einer Person; und (e) Stoppen und/oder Umkehrung der Werkzeugbewegung und/oder Ausgabe eines vorzugsweise optischen und/oder akustischen Warnsignals.

Dieser Aspekt der Erfindung betrifft den Einsatz des Druck- oder Kraftsensors als Kollisionserkennung. Die Sicherheit einer Biegepresse wird dadurch effektiv erhöht und Beschädigungen verhindert. Ein gesonderter Sensor ist nicht erforderlich, da der Kraft- oder Drucksensor, insbesondere ein Drucksensor im Krafthauptfluss der Biegepresse, für diese Zwecke herangezogen werden kann. Piezosensoren eignen sich für diese Zwecke besonders, da deren hohe Auflösung, hoher Dynamikbereich und hohe Empfindlichkeit eine zuverlässige Kollisionsüberwachung erlauben.

Ebenso kann mit diesem Verfahren eine Kollision der Werkzeuge erkannt werden, wenn z.B. eines der Werkzeuge für den Biegevorgang falsch eingesetzt oder überhaupt falsch ausgewählt wurde. Kollisionen, die durch falsche Eingabe, z.B. Aufrufen eines falschen Steuerprogrammes, verursacht werden, können ebenfalls detektiert werden.

Die Erfindung betrifft auch ein Computerprogramm, das ein erfindungsgemäßes Verfahren ausführt, wenn es in einer Steuereinrichtung einer erfindungsgemäßen Biegepresse abläuft. Ebenso betrifft die Erfindung einen maschinenlesbaren Träger, auf dem ein Computerprogrammprodukt mit Programmcode, der das oben erwähnte Computerprogramm umfasst, gespeichert ist.

Zum besseren Verständnis der Erfindung wird diese anhand der nachfolgenden Figuren näher erläutert.

Es zeigen jeweils in stark vereinfachter, schematischer Darstellung:
- Fig. 1: eine erfindungsgemäße Biegepresse;
- Fig. 2 bis 6: bevorzugte Anordnungen des Kraft- oder Drucksensors;
- Fig. 7: den steuerungstechnischen Aspekt einer Biegepresse;
- Fig. 8 bis 10: Abhängigkeiten zur Berechnung des Biegewinkels;
- Fig. 11: das Prinzip einer Kraftverteilungseinrichtung für ein Abwälzverfahren;
- Fig. 12: Verformung einer Biegepresse.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

Die Ausführungsbeispiele zeigen mögliche Ausführungsvarianten der Biegepresse, wobei an dieser Stelle bemerkt sei, dass die Erfindung nicht auf die speziell dargestellten Ausführungsvarianten derselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt.

Weiters können auch Einzelmerkmale oder Merkmalskombinationen aus den gezeigten und beschriebenen unterschiedlichen Ausführungsbeispielen für sich eigenständige, erfinderische oder erfindungsgemäße Lösungen darstellen.

Die den eigenständigen erfinderischen Lösungen zugrundeliegende Aufgabe kann der Beschreibung entnommen werden.

Vor allem können die einzelnen in den Figuren gezeigten Ausführungen den Gegenstand von eigenständigen, erfindungsgemäßen Lösungen bilden. Die diesbezüglichen, erfindungsgemä-ßen Aufgaben und Lösungen sind den Detailbeschreibungen dieser Figuren zu entnehmen.

Der Ordnung halber sei abschließend darauf hingewiesen, dass zum besseren Verständnis des Aufbaus der Biegepresse diese bzw. deren Bestandteile teilweise unmaßstäblich und/oder vergrößert und/oder verkleinert dargestellt wurden.

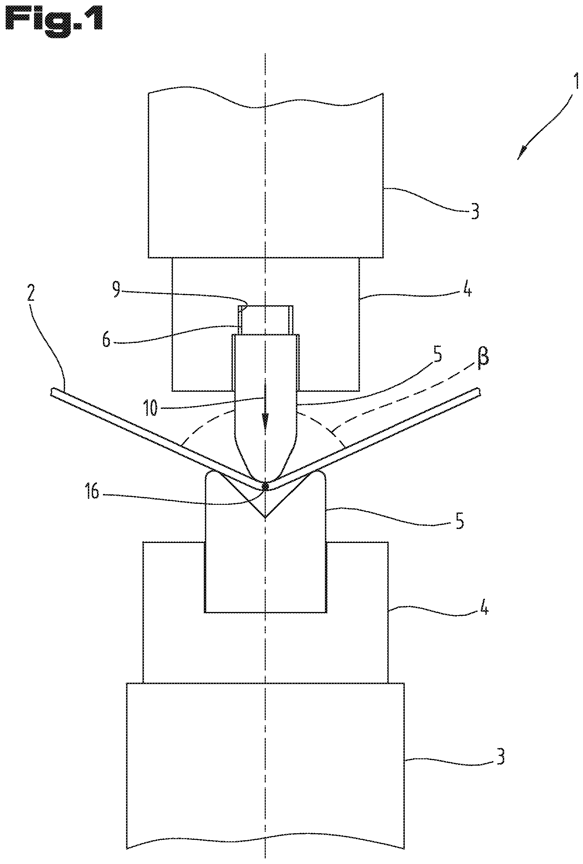

Fig. 1 zeigt eine Biegepresse 1 zum Biegen eines Werkstückes 2 umfassend zwei relativ zueinander bewegbare Plattformen 3, die jeweils eine ein Werkzeug 5 haltende Werkzeughalterung 4 tragen. Die Werkzeughalterung 4 kann auch mehrteilig aufgebaut sein, insbesondere wenn sie eine Werkzeugklemmung bildet, und zwei Klemmbacken oder -leisten zur Fixierung des Werkzeug 5 aufweisen.

In der dargestellten Ausführungsform ist die eine (untere) Plattform 3 durch einen Maschinentisch und die andere (obere) Plattform 3 durch einen Pressbalken gebildet. Die Werkzeuge 5 werden durch ein Oberwerkzeug, hier in Form eines Stempels, und ein Unterwerkzeug, hier in Form einer Matrize, gebildet.

Die Werkzeuge 5 werden entlang der Pressrichtung 10 relativ aufeinander zubewegt, wobei das untere Werkzeug 5 üblicherweise stationär bleibt. Die Werkzeuge 5 und die entsprechenden Werkzeughalterungen 4 haben längliche Form, wodurch eine (senkrecht zur Bildebene der Fig. 1 verlaufende) Biegelinie 16 des Werkstückes 2 definiert wird. Durch den Biegevorgang stellt sich ein Biegewinkel β des Werkstückes 2 ein. Zu unterscheiden ist zwischen dem Biegewinkel in dem durch die Werkzeuge 5 belasteten Zustand und im relaxierten Zustand, worauf weiter unten nochmals eingegangen wird.

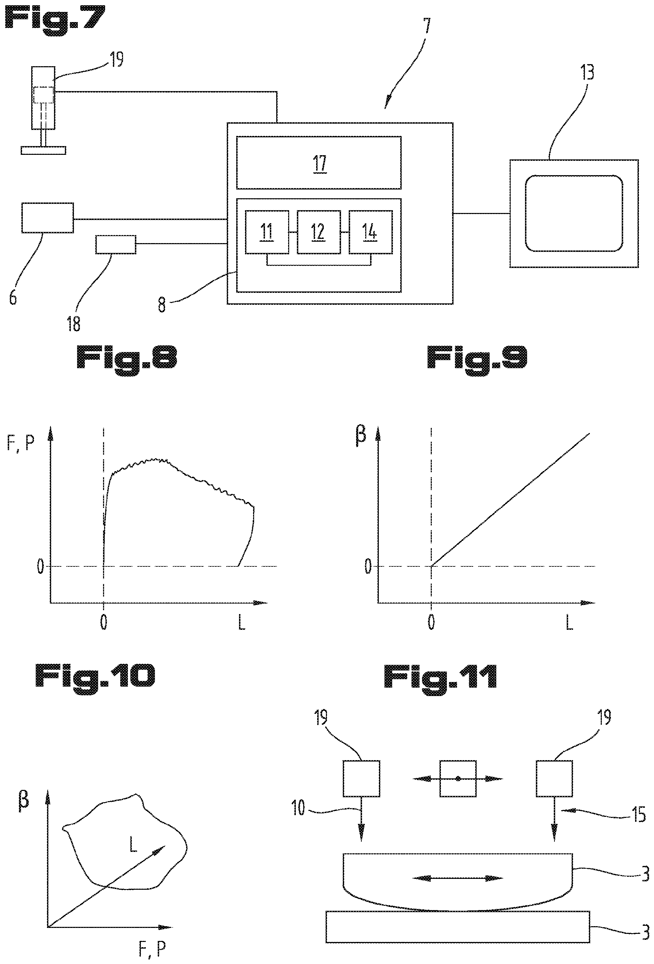

Die Biegepresse 1 weist einen Kraft- oder Drucksensor 6 auf, der mit einer der Werkzeughalterungen 4 (in Fig. 1 mit der oberen Werkzeughalterung) zusammenwirkt. Der Sensor 6 mit einer Steuereinrichtung 7 der Biegepresse 1 verbunden (Fig. 7). Die Steuereinrichtung 7 umfasst eine Datenverarbeitungseinrichtung 8 umfasst, die dazu eingerichtet ist, um aus den Sensordaten des Kraft- oder Drucksensors 6 zumindest eine Eigenschaft des Werkstückes 2 und/oder die durch den Biegevorgang bewirkte Verformung der Biegepresse 1 zu ermitteln.

Der zugrundeliegende Algorithmus nutzt dabei vorbekannte bzw. in Kalibriervorgängen zu ermittelnden Abhängigkeiten aus (Fig. 8 bis 10).

Die zumindest eine zu ermittelnde Eigenschaft des Werkstückes 2 kann z.B. der durch den Biegevorgang bewirkte Biegewinkel β und/oder die Dicke des Werkstückes 2 sein.

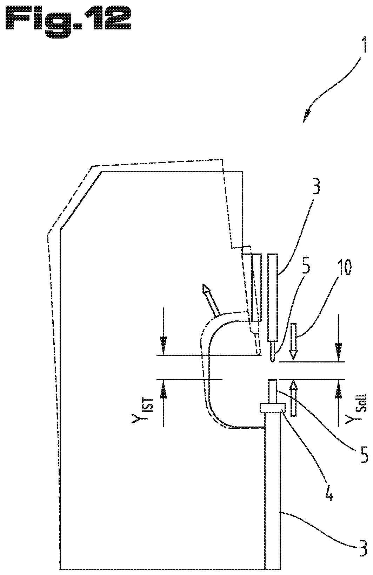

Auch die Verformung der Biegepresse 1, insbesondere Durchbiegung und/oder Ständeraufweitung, wie sie z.B. in Fig. 12 angedeutet ist, kann aus den Sensordaten ermittelt werden. Dazu dient insbesondere ein Datensatz, der die Abhängigkeiten dieser Größen (Abstandsänderung, Durchbiegewinkel) von der aufgebrachten Kraft abbildet.

In der Ausführungsform von Fig. 1 ist der Sensor 6 zwischen der (oberen) Werkzeughalterung 4 und dem von der Werkzeughalterung 4 gehaltenen Werkzeug 5 angeordnet. Alternativ oder zusätzlich könnte ein Kraft- oder Drucksensor mit der unteren Werkzeughalterung 4 zusammenwirken.

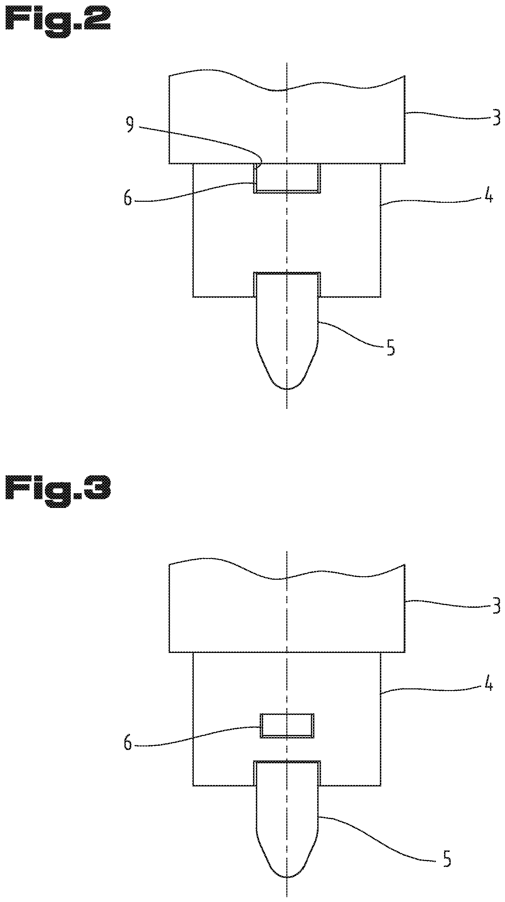

Der Kraft- oder Drucksensor 6 kann auch zwischen der Werkzeughalterung 4 und der die Werkzeughalterung 4 tragenden Plattform 3 angeordnet sein, wie dies exemplarisch in Fig. 2 dargestellt ist. Ebenso ist eine Anordnung innerhalb der Werkzeughalterung 4 (Fig. 3) möglich.

Auch sind Alternativen zur Erfindung denkbar bei denen der Sensor 6 an der Werkzeughalterung 4, z.B. in Form eines Dehnungsmessstreifens, angebracht ist.

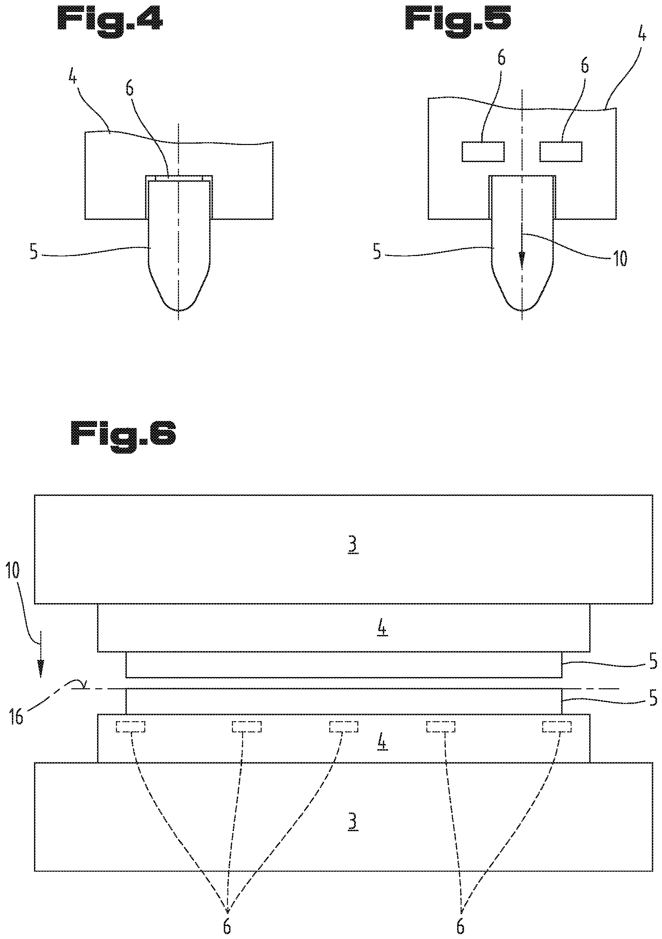

Fig. 4 zeigt eine Ausführungsform eines flächigen Sensors 6, der zwischen der Werkzeugaufnahme der Werkzeughalterung 4 und dem Werkzeug 5 angeordnet, vorzugsweise eingeklebt ist.

In den in den Fig. 2 bis 5 dargestellten Ausführungsformen ist der Sensor 6 vorzugsweise ein Drucksensor ist, der im Krafthauptfluss der Biegepresse 1 angeordnet ist. Wie bereits eingangs erwähnt ist die Verwendung eines piezoelektrischen Sensors aufgrund seiner Auflösung, Dynamik und Empfindlichkeit besonders bevorzugt. Außerdem benötigt ein Piezosensor kaum Energie.

Fig. 1, 2 und 4 zeigen, dass der Kraft- oder Drucksensor 6 in einer Vertiefung 9 bzw. Ausnehmung der Werkzeugaufnahme 4 sitzt. Der Sensor 6 ist dabei von der Werkzeugaufnahme 4 umgeben und zumindest bei in die Werkzeugaufnahme 4 eingesetztem Werkzeug 5 von außen nicht sichtbar. Die Abmessung des zumindest einen Kraft- oder Drucksensors 6 in einer Richtung, die senkrecht zur Pressrichtung 10 und senkrecht zur Längserstreckung der Werkzeugaufnahme 4 steht, ist hier kleiner, vorzugsweise höchstens halb so groß ist wie die Abmessung der Werkzeugaufnahme 4 in derselben Richtung.

Fig. 6 zeigt eine Ausführungsform, bei der die Biegepresse 1 mehrere Kraft- oder Drucksensoren 6 umfasst, die entlang der Längserstreckung der Werkzeugaufnahme 4 verteilt bzw. voneinander beabstandet angeordnet sind. Dies ermöglicht eine ortsaufgelöste Ermittlung insbesondere der Biegewinkel des Werkstückes 2.

In einer gemäß Fig. 5 dargestellten Alternative zur Erfindung, die mit der Ausführungsform gemäß Fig. 6 kombiniert sein kann, umfasst die Biegepresse 1 zumindest zwei, vorzugsweise mehrere Kraft- oder Drucksensoren 6, die in einer Richtung, die quer zur Längserstreckung der Werkzeugaufnahme 4 und quer zur Pressrichtung 10 steht, voneinander beabstandet angeordnet sind. Dadurch kann auch eine Ortsauflösung quer bzw. senkrecht zur Biegelinie 16 erreicht werden.

Im Folgenden wird das erfindungsgemäße Verfahren zum Biegen eines Werkstückes 2 mit einer Biegepresse 1 näher beschrieben. Die Verfahrensschritte umfassen: (a) Durchführung eines Biegevorganges durch relatives aufeinander zu Bewegen der Werkzeuge 5; (b) Messung der/des durch den Biegevorgang aufgebrachten Kraft und/oder Druckes mit dem Kraft- oder Drucksensor 6; und (c) Ermittlung zumindest einer Eigenschaft des Werkstückes 2 und/oder der durch den Biegevorgang bewirkten Verformung der Biegepresse 1 aus den Sensordaten des Kraft- oder Drucksensors 6.

Wie bereits erwähnt kann die im Schritt (c) ermittelte Eigenschaft des Werkstückes 2 der durch den Biegevorgang bewirkte Biegewinkel β des Werkstückes 2 sein.

Eine Ermittlung der Dicke des Werkstückes 2 wäre ebenfalls möglich, da die erforderliche Druckaufbringung von der Dicke des Werkstückes 2 abhängt.

Die Messung der Kraft oder des Druckes mit dem Kraft- oder Drucksensor 6 kann während des gesamten Biegevorganges durchgehend erfolgen.

Fig. 7 zeigt in schematischer Darstellung, dass die Durchführung des Schrittes (c) mittels eines Algorithmus 11 erfolgen kann, der in Abhängigkeit von zumindest einer Eingangsgröße die zumindest eine Eigenschaft des Werkstückes 2 und/oder die Verformung der Biegepresse 1 ermittelt. Der Algorithmus 11 greift vorzugsweise auf zumindest einen gespeicherten Datensatz 12 zurück, der jedem Wert der zumindest einen Eigenschaft des Werkstückes 2 und/oder der Verformung der Biegepresse 1 eine Eingangsgröße oder eine aus der zumindest einen Eingangsgröße abgeleitete Zwischengröße zuordnet. Der Algorithmus läuft in einer Datenverarbeitungseinrichtung 8 der Steuereinrichtung 7 der Biegepresse. Die Ausgangsgrö-ßen und/oder Ausgangsbefehle werden an das Steuerprogramm 17 übermittelt. Die Steuereinrichtung 7 ist mit dem/den Antriebe(n) 19 der Biegepresse verbunden und steuert diese an.

Fig. 8 zeigt z.B. eine Abhängigkeit der Eintauchtiefe L von der Kraft F bzw. dem Druck P und Fig. 9 zeigt eine Abhängigkeit des Biegewinkels β von der Eintauchtiefe L. Diese Abhängigkeiten sind in Datensätzen gespeichert und sind Bestandteil des Algorithmus oder werden von diesem aufgerufen. Die zweistufige Ermittlungsmethode von Fig. 8 und 9 setzt die Kenntnis der Werkstückdicke bzw. anderer Werkstückeigenschaften voraus.

In dem dreidimensionalen Diagramm von Fig. 10 wird auch die Eintauchtiefe L gemessen und dem Algorithmus neben den Sensordaten des Kraft- bzw. Drucksensors 6 als Eingangsgröße zur Verfügung gestellt. Der Biegewinkel β kann hier ohne Kenntnis der Werkstückdicke ermittelt werden. Bei entsprechenden Datensätzen, die die Abhängigkeit der Werkstückdicke von Kraft und Eintauchtiefe abbilden, kann auch die Werkstückdicke ermittelt werden.

Bevorzugt wird somit, wenn der Algorithmus 11 zusätzlich zu den Sensordaten des Kraft- oder Drucksensors 6 die relative Lage der Werkzeuge 5 zueinander, insbesondere die Eintauchtiefe, als Eingangsgröße zur Ermittlung der zumindest einen Eigenschaft des Werkstückes 2 und/oder der Verformung der Biegepresse 1 heranzieht. Die relative Lage der Werkzeuge 5 kann mit einem gesonderten Sensor oder Messwertgeber 19 ermittelt werden (Fig. 7).

Mit dem erfindungsgemäßen Verfahren kann im Schritt (c) jener Biegewinkel β ermittelt wird, den das Werkstück 2 in dem durch die Werkzeuge 5 belasteten Zustand aufweist. Alternativ oder zusätzlich kann im Schritt (c) jener Biegewinkel ermittelt wird, den das gebogene Werkstück 2 im relaxierten Zustand annimmt bzw. annehmen wird.

Zur Ermittlung des Biegewinkels im relaxierten Zustand des gebogenen Werkstückes 2 kann die relative Lage der Werkzeuge 5, insbesondere die Eintauchtiefe, in jener Position herangezogen wird, in der die/der von den Werkzeugen 5 auf das Werkstück 2 ausgebübte Kraft oder Druck gegen Null geht oder zumindest ein Werkzeug 2 den Berührkontakt mit dem gebogenen Werkstück 2 verliert. Das Erreichen dieser Position kann bevorzugt mittels der Sensordaten des Kraft- oder Drucksensors 6 festgestellt werden.

Eine mögliche Prozedur wäre folgende: Zuerst Biegen und den momentanen Biegewinkel (d.h. im belasteten Zustand) bestimmen; dann mit dem Werkzeug zurückfahren, bis die Berührung mit dem Werkstück aufhört (wird durch den Sensor 6 erkannt). In dieser Position wird die Eintauchtiefe bestimmt, aus der dann auf den Rückfederwinkel bzw. den Biegewinkel im unbelasteten Zustand geschlossen werden kann.

Wie bereits erwähnt kann die Biegepresse 1 zumindest zwei Kraft- oder Drucksensoren 6 aufweisen (Fig. 5 und 6). Aus den jeweiligen Sensordaten der zumindest zwei Kraft- oder Drucksensoren 6 kann je ein Biegewinkel ermittelt werden.

Wie in Fig. 7 schematisch dargestellt kann nun die Steuerung des Biegevorgangs in Abhängigkeit der ermittelten Eigenschaft des Werkstückes 2 und/oder Verformung der Biegepresse 1 erfolgen.

Z.B. kann bei einer Abweichung des ermittelten Biegewinkels von einem Soll-Wert die Biegepresse 1 eine Aktion setzen, insbesondere eine Ausgabe der Abweichung und/oder des ermittelten Biegewinkels an einer Ausgabeschnittstelle 13, insbesondere einem Display (Fig. 7), oder ein Speichern der Abweichung und/oder des ermittelten Biegewinkels in einem Speicher 14 (Fig. 7).

Die Ausführungsform der Fig. 6, bei der die Biegepresse 1 mehrerer Sensoren entlang der Biegelinie verteilt aufweist, kann folgendermaßen erweitert werden: Die Biegepresse 1 kann mit einer Kraftverteilungseinrichtung 15 zur lageveränderlichen Krafteinleitung entlang der Biegelinie 16 ausgestattet werden. Die Steuerung der Kraftverteilungseinrichtung 15 erfolgt dann in Abhängigkeit von den Sensordaten der entlang der Längserstreckung der Werkzeugaufnahme 4 verteilten Kraft- oder Drucksensoren 6. Eine Kraftverteilungseinrichtung zur lageveränderlichen Krafteinleitung entlang der Biegelinie ermöglicht, den Ort der Krafteinleitung bzw. das Ausmaß der Krafteinleitung an einer bestimmten Position entlang der Biegelinie zu variieren. Dadurch kann ein exakt konstanter Biegweinkel entlang der gesamten Biegelinie erreicht werden. Lokale Abweichungen von einem vorgegebenen Soll-Biegewinkel können somit während des Biegevorganges einfach beseitigt werden.

Fig. 11 zeigt ein Beispiel einer Kraftverteilungseinrichtung 15 in Form einer Abwälzeinrichtung zur punktuellen Krafteinleitung. Hier erfolgt eine mehr oder weniger punktuelle Krafteinleitung mit Hilfe einer Abwälzbewegung der oberen Plattform 3 (des Pressbalkens) entlang der unteren Plattform 3 (Maschinentisch).

Für diese Abwälzbewegung des Pressbalkens wird zusätzlich zu den beiden in Fig. 11 gezeigten vertikalen Antrieben (Presszylinder) noch ein weiterer Antrieb für horizontale Bewegungen des Pressbalkens vorgesehen (in Fig. 11 zwischen den Antrieben 19 rein schematisch dargestellt). Durch einen Radius an der Unterseite des Pressbalkens erreicht man die Reduzierung der gesamten Balkenlänge auf einen einzelnen Punkt. Dieser Punkt kann nun mit Hilfe entsprechender Ansteuerung der (drei) Antriebe über die gesamte Biegelinie geführt werden.

Ein bevorzugter Aspekt der Erfindung betrifft ein Verfahren zum Biegen eines Werkstückes mit einer Biegepresse 1 mit den Schritten: (a) Durchführung eines Biegevorganges durch relatives aufeinander zu Bewegen zweier Werkzeuge 5; (b) Messung der/des auf ein Werkzeug 5 und/oder auf eine das Werkzeug 5 haltende Werkzeughalterung 4 einwirkenden Kraft und/oder Druckes vor, während und/oder nach dem Biegevorgang mit zumindest einem Kraft- oder Drucksensor 6; (d) Auswertung der Sensordaten des Kraft- oder Drucksensors 6 im Hinblick auf eine unerwünschte Kollision eines Werkzeuges 5 oder einer Werkzeughalterung 4 mit einem falsch eingesetzten Werkzeug 5, einem Gegenstand oder einer Person; und (e) Stoppen und/oder Umkehrung der Werkzeugbewegung und/oder Ausgabe eines vorzugsweise optischen und/oder akustischen Warnsignals.

Dadurch wird die Biegepresse um ein zuverlässiges Sicherheitssystem erweitert.

### Bezugszeichenaufstellung

- 1: Biegepresse
- 2: Werkstück
- 3: Plattform
- 4: Werkzeugaufnahme
- 5: Werkzeug
- 6: Kraft- oder Drucksensor
- 7: Steuereinrichtung
- 8: Datenverarbeitungseinrichtung
- 9: Vertiefung
- 10: Pressrichtung
- 11: Algorithmus
- 12: Datensatz
- 13: Ausgabeschnittstelle
- 14: Speicher
- 15: Kraftverteilungseinrichtung
- 16: Biegelinie
- 17: Steuerprogramm
- 18: Sensor oder Messwertgeber zur Ermittlung der relativen Lage der Werkzeuge 5
- 19: Antrieb
- β: Biegewinkel
- L: Eintauchtiefe
- F, P: Kraft, Druck

## Patentansprüche

1. Biegepresse (1) zum Biegen eines Werkstückes (2) umfassend zwei relativ zueinander bewegbare Plattformen (3), die jeweils eine ein Werkzeug (5) haltende Werkzeughalterung (4) tragen, eine Steuereinrichtung (7) und einen mit der Steuereinrichtung (7) verbundenen Sensor (6), **dadurch gekennzeichnet, dass** der zumindest eine Sensor (6) ein im Krafthauptfluss der Biegepresse (1) angeordneter Drucksensor ist, der vorzugsweise mit einer der Werkzeughalterungen (4) zusammenwirkt, und dass die Steuereinrichtung (7) eine Datenverarbeitungseinrichtung (8) umfasst, die dazu eingerichtet ist, um aus den Sensordaten des Drucksensors (6) zumindest eine Eigenschaft des Werkstückes (2) und/oder die durch den Biegevorgang bewirkte Verformung der Biegepresse (1) zu ermitteln und dass der Druck-sensor (6) innerhalb der Werkzeughalterung (4) oder zwischen der Werkzeughalterung (4) und dem von der Werkzeughalterung (4) gehaltenen Werkzeug (5) oder zwischen der Werkzeughalterung (4) und der die Werkzeughalterung (4) tragenden Plattform (3) angeordnet ist.

2. Biegepresse nach Anspruch 1, **dadurch gekennzeichnet, dass** die zumindest eine Eigenschaft des Werkstückes (2) der durch den Biegevorgang bewirkte Biegewinkel und/oder die Dicke des Werkstückes (2) ist.

3. Biegepresse nach Anspruch 1 oder 2, **dadurch gekennzeichnet, dass** die Werkzeughalterung (4) eine Werkzeugklemmung ist, in der das Werkzeug (5), vorzugsweise zwischen zwei Klemmbacken bzw. Klemmleisten, eingeklemmt und dadurch in Position gehalten wird.

4. Biegepresse nach einem der vorhergehenden Ansprüche, **dadurch gekennzeichnet, dass** der Drucksensor (6) ein piezoelektrischer Sensor ist.

5. Biegepresse nach einem der vorhergehenden Ansprüche, **dadurch gekennzeichnet, dass** der Drucksensor (6) in einer Vertiefung (9) oder Ausnehmung sitzt, insbesondere in einer Vertiefung (9) oder Ausnehmung der Werkzeugaufnahme (4).

6. Biegepresse nach einem der vorhergehenden Ansprüche, **dadurch gekennzeichnet, dass** der Drucksensor (6) von der Werkzeugaufnahme (4) umgeben ist und zumindest bei in die Werkzeugaufnahme (4) eingesetztem Werkzeug (5) von außen nicht sichtbar ist.

7. Biegepresse nach einem der vorhergehenden Ansprüche, **dadurch gekennzeichnet, dass** die Abmessung des zumindest einen Drucksensors (6) in einer Richtung, die senkrecht zur Pressrichtung (10) und senkrecht zur Längserstreckung der Werkzeugaufnahme (4) steht, kleiner, vorzugsweise höchstens halb so groß ist wie die Abmessung der Werkzeugaufnahme (4) in derselben Richtung.

8. Biegepresse nach einem der vorhergehenden Ansprüche, **dadurch gekennzeichnet, dass** die Biegepresse (1) zumindest zwei, vorzugsweise mehrere Drucksensoren (6) umfasst, die entlang der Längserstreckung der Werkzeugaufnahme (4) voneinander beabstandet angeordnet sind.

9. Biegepresse nach einem der vorhergehenden Ansprüche, **dadurch gekennzeichnet, dass** die eine Plattform (3) durch einen Maschinentisch und die andere Plattform (3) durch einen Pressbalken gebildet wird und/oder dass das eine Werkzeug (5) durch ein Oberwerkzeug und das andere Werkzeug (5) durch ein Unterwerkzeug gebildet ist, wobei vorzugsweise ein Werkzeug (5) durch eine Matrize und das andere Werkzeug (5) durch einen Stempel gebildet ist.

10. Verfahren zum Biegen eines Werkstückes (2) mit einer Biegepresse (1) nach einem der vorhergehenden Ansprüche, **gekennzeichnet durch** die Schritte: (a) Durchführung eines Biegevorganges durch relatives aufeinander zu Bewegen der Werkzeuge (5); (b) Messung der/des durch den Biegevorgang aufgebrachten Kraft und/oder Druckes mit dem Druck-sensor (6); und (c) Ermittlung zumindest einer Eigenschaft des Werkstückes (2) und/oder der durch den Biegevorgang bewirkten Verformung der Biegepresse (1) aus den Sensordaten des Drucksensors (6).

11. Verfahren nach Anspruch 10, **dadurch gekennzeichnet, dass** eine im Schritt (c) ermittelte Eigenschaft des Werkstückes (2) der durch den Biegevorgang bewirkte Biegewinkel des Werkstückes (2) ist.

12. Verfahren nach Anspruch 10 oder 11, **dadurch gekennzeichnet, dass** eine im Schritt (c) ermittelte Eigenschaft des Werkstückes (2) die Dicke des Werkstückes (2) ist.

13. Verfahren nach einem der Ansprüche 10 bis 12, **dadurch gekennzeichnet, dass** die Messung der Kraft oder des Druckes mit dem Drucksensor (6) während des gesamten Biegevorganges durchgehend erfolgt.

14. Verfahren nach einem der Ansprüche 10 bis 13, **dadurch gekennzeichnet, dass** die Durchführung des Schrittes (c) mittels eines Algorithmus (11) erfolgt, der in Abhängigkeit von zumindest einer Eingangsgröße die zumindest eine Eigenschaft des Werkstückes (2) und/oder die Verformung der Biegepresse (1) ermittelt, wobei vorzugsweise der Algorithmus (11) auf zumindest einen gespeicherten Datensatz (12) zurückgreift, der jedem Wert der zumindest einen Eigenschaft des Werkstückes (2) und/oder der Verformung der Biegepresse (1) eine Eingangsgröße oder eine aus der zumindest einen Eingangsgröße abgeleitete Zwischengröße zuordnet.

15. Verfahren nach einem der Ansprüche 10 bis 14, **dadurch gekennzeichnet, dass** der Algorithmus (11) zusätzlich zu den Sensordaten des Drucksensors (6) die relative Lage der Werkzeuge (5) zueinander, insbesondere die Eintauchtiefe, als Eingangsgröße zur Ermittlung der zumindest einen Eigenschaft des Werkstückes (2) und/oder der Verformung der Biegepresse (1) heranzieht.

16. Verfahren nach einem der Ansprüche 10 bis 15, **dadurch gekennzeichnet, dass** im Schritt (c) jener Biegewinkel ermittelt wird, den das Werkstück (2) in dem durch die Werkzeuge (5) belasteten Zustand aufweist.

17. Verfahren nach einem der Ansprüche 10 bis 16, **dadurch gekennzeichnet, dass** im Schritt (c) jener Biegewinkel ermittelt wird, den das gebogene Werkstück (2) im relaxierten Zustand annimmt.

18. Verfahren nach einem der Ansprüche 10 bis 17, **dadurch gekennzeichnet, dass** zur Ermittlung des Biegewinkels im relaxierten Zustand des gebogenen Werkstückes (2) die relative Lage der Werkzeuge (5), insbesondere die Eintauchtiefe, in jener Position herangezogen wird, in der die/der von den Werkzeugen (5) auf das Werkstück (2) ausgebübte Kraft oder Druck gegen Null geht oder zumindest ein Werkzeug (2) den Berührkontakt mit dem gebogenen Werkstück (2) verliert.

19. Verfahren nach Anspruch 18, **dadurch gekennzeichnet, dass** das Erreichen dieser Position mittels der Sensordaten des Drucksensors (6) festgestellt wird.

20. Verfahren nach einem der Ansprüche 10 bis 19, **dadurch gekennzeichnet, dass** die Biegepresse (1) zumindest zwei Drucksensoren (6) aufweist und dass aus den Sensordaten der zumindest zwei Drucksensoren (6) je ein Biegewinkel ermittelt wird.

21. Verfahren nach einem der Ansprüche 10 bis 20, **dadurch gekennzeichnet, dass** die Steuerung des Biegevorgangs in Abhängigkeit der ermittelten Eigenschaft des Werkstückes (2) und/oder Verformung der Biegepresse (1) erfolgt.

22. Verfahren nach einem der Ansprüche 10 bis 21, **dadurch gekennzeichnet, dass** bei einer Abweichung des ermittelten Biegewinkels von einem Soll-Wert die Biegepresse (1) eine Aktion setzt, insbesondere eine Ausgabe der Abweichung und/oder des ermittelten Biegewinkels an einer Ausgabeschnittstelle (13), insbesondere einem Display, oder ein Speichern der Abweichung und/oder des ermittelten Biegewinkels in einem Speicher (14).

23. Verfahren nach einem der Ansprüche 10 bis 22, bei dem die Biegepresse nach Anspruch 8 ausgebildet ist, **dadurch gekennzeichnet, dass** die Biegepresse (1) eine Kraftverteilungseinrichtung (15) zur lageveränderlichen Krafteinleitung entlang der Biegelinie (16) aufweist, insbesondere eine Abwälzeinrichtung zur punktuellen Krafteinleitung, und dass die Steuerung der Kraftverteilungseinrichtung (15) in Abhängigkeit von den Sensordaten der entlang der Längserstreckung der Werkzeugaufnahme (4) verteilten Drucksensoren (6) erfolgt.

24. Verfahren zum Biegen eines Werkstückes mit einer Biegepresse (1) nach einem der Ansprüche 10 bis 23, **gekennzeichnet durch** die Schritte: (a) Durchführung eines Biegevorganges durch relatives aufeinander zu Bewegen zweier Werkzeuge (5); (b) Messung der/des auf ein Werkzeug (5) und/oder auf eine das Werkzeug (5) haltende Werkzeughalterung (4) einwirkenden Kraft und/oder Druckes vor, während und/oder nach dem Biegevorgang mit zumindest einem Kraft- oder Drucksensor (6); (d) Auswertung der Sensordaten des Drucksensors (6) im Hinblick auf eine unerwünschte Kollision eines Werkzeuges (5) oder einer Werkzeughalterung (4) mit einem falsch eingesetzten Werkzeug (5), einem Gegenstand oder einer Person; und (e) Stoppen und/oder Umkehrung der Werkzeugbewegung und/oder Ausgabe eines vorzugsweise optischen und/oder akustischen Warnsignals.

25. Computerprogramm, das ein Verfahren nach einem der Ansprüche 10 bis 24 ausführt, wenn es in einer Steuereinrichtung (7) einer Biegepresse (1) nach einem der Ansprüche 1 bis 9 abläuft.

26. Maschinenlesbarer Träger, auf dem ein Computerprogrammprodukt mit Programmcode, der ein Computerprogramm nach Anspruch 25 umfasst, gespeichert ist.

## Claims

1. A bending press (1) for bending a workpiece (2) comprising two platforms (3) movable relative to one another, which each support a tool mount (4) holding a tool (5), a controller (7) and a sensor (6) connected to the controller (7), **characterized in that** the at least one sensor (6) is a pressure sensor arranged in the force main flow of the bending press (1), which pressure sensor preferably cooperates with one of the tool mounts (4), and that the controller (7) comprises a data processing device (8) which is configured to determine from the sensor data of the pressure sensor (6) at least one property of the workpiece (2) and/or the deformation of the bending press (1) caused by the bending operation, and that the pressure sensor (6) is arranged inside the tool mount (4) or between the tool mount (4) and the tool (5) held by the tool mount (4) or between the tool mount (4) and the platform (3) supporting the tool mount (4).

2. The bending press according to claim 1, **characterized in that** the at least one property of the workpiece (2) is the bending angle caused by the bending operation and/or the thickness of the workpiece (2).

3. The bending press according to claim 1 or 2, **characterized in that** the tool mount (4) is a tool clamping in which the tool (5) is clamped, preferably between two clamping jaws and/or clamping bars, and thus held in position.

4. The bending press according to one of the preceding claims, **characterized in that** the pressure sensor (6) is a piezoelectric sensor.

5. The bending press according to one of the preceding claims, **characterized in that** the pressure sensor (6) is located in an indentation (9) or recess, in particular in an indentation (9) or recess of the tool mount (4).

6. The bending press according to one of the preceding claims, **characterized in that** the pressure sensor (6) is surrounded by the tool mount (4) and is not visible from the outside at least when the tool (5) is inserted into the tool mount (4).

7. The bending press according to one of the preceding claims, **characterized in that** the dimension of the at least one pressure sensor (6) in a direction which is perpendicular to the pressing direction (10) and perpendicular to the longitudinal extent of the tool mount (4) is smaller, preferably at most half as large as the dimension of the tool mount (4) in the same direction.

8. The bending press according to one of the preceding claims, **characterized in that** the bending press (1) comprises at least two, preferably multiple pressure sensors (6), which are arranged spaced apart from one another along the longitudinal extent of the tool mount (4).

9. The bending press according to one of the preceding claims, **characterized in that** one platform (3) is formed by a machine table and the other platform (3) is formed by a press beam and/or that one tool (5) is formed by an upper tool and the other tool (5) is formed by a lower tool, wherein preferably one tool (5) is formed by a die and the other tool (5) is formed by a punch.

10. A method for bending a workpiece (2) with a bending press (1) according to one of the preceding claims, **characterized by** the steps: (a) performing a bending operation by relatively moving the tools (5) towards each other; (b) measuring the force and/or pressure applied by the bending operation with the pressure sensor (6); and (c) determining at least one property of the workpiece (2) and/or the deformation of the bending press (1) caused by the bending operation from the sensor data of the pressure sensor (6).

11. The method according to claim 10, **characterized in that** a property of the workpiece (2) determined in step (c) is the bending angle of the workpiece (2) caused by the bending operation.

12. The method according to claim 10 or 11, **characterized in that** a property of the workpiece (2) determined in step (c) is the thickness of the workpiece (2).

13. The method according to one of claims 10 to 12, **characterized in that** the measurement of the force or of the pressure with the pressure sensor (6) is performed continuously during the entire bending operation.

14. The method according to one of claims 10 to 13, **characterized in that** step (c) is carried out by means of an algorithm (11) which determines the at least one property of the workpiece (2) and/or the deformation of the bending press (1) as a function of at least one input variable, wherein the algorithm (11) preferably makes use of at least one stored data set (12) which assigns to each value of the at least one property of the workpiece (2) and/or of the deformation of the bending press (1) an input variable or an intermediate variable derived from the at least one input variable.

15. The method according to one of claims 10 to 14, **characterized in that** the algorithm (11), in addition to the sensor data of the pressure sensor (6), uses the relative position of the tools (5) to one another, in particular the immersion depth, as an input variable for determining the at least one property of the workpiece (2) and/or the deformation of the bending press (1).

16. The method according to one of claims 10 to 15, **characterized in that** in step (c) that bending angle is determined which the workpiece (2) has in the state loaded by the tools (5).

17. The method according to one of claims 10 to 16, **characterized in that** in step (c) that bending angle is determined which the bent workpiece (2) assumes in the relaxed state.

18. The method according to one of claims 10 to 17, **characterized in that** for determining the bending angle in the relaxed state of the bent workpiece (2), the relative position of the tools (5), in particular the immersion depth, is used **in that** position in which the force or pressure exerted by the tools (5) on the workpiece (2) approaches zero or at least one tool (2) loses contact with the bent workpiece (2).

19. The method according to claim 18, **characterized in that** the reaching of this position is determined by means of the sensor data of the pressure sensor (6).

20. The method according to one of claims 10 to 19, **characterized in that** the bending press (1) has at least two pressure sensors (6) and **in that** a bending angle is determined from the sensor data of each of the at least two pressure sensors (6).

21. The method according to one of claims 10 to 20, **characterized in that** the bending operation is controlled as a function of the determined property of the workpiece (2) and/or deformation of the bending press (1).

22. The method according to one of claims 10 to 21, **characterized in that**, in the event of a deviation of the determined bending angle from a target value, the bending press (1) sets an action, in particular an output of the deviation and/or of the determined bending angle at an output interface (13), in particular a display, or a storage of the deviation and/or of the determined bending angle in a memory (14).

23. The method according to one of claims 10 to 22, in which the bending press is configured according to claim 8, **characterized in that** the bending press (1) has a force distribution device (15) for the position-variable introduction of force along the bending line (16), in particular a rolling device for the punctual introduction of force, and that the force distribution device (15) is controlled as a function of the sensor data of the pressure sensors (6) distributed along the longitudinal extent of the tool mount (4).

24. The method for bending a workpiece with a bending press (1) according to one of claims 10 to 23, **characterized by** the steps: (a) performing a bending operation by relatively moving two tools (5) towards each other; (b) measuring the force and/or pressure acting on a tool (5) and/or on a tool mount (4) holding the tool (5) before, during and/or after the bending operation with at least one force or pressure sensor (6); (d) evaluation of the sensor data of the pressure sensor (6) with regard to an undesired collision of a tool (5) or a tool mount (4) with an incorrectly inserted tool (5), an object or a person; and (e) stopping and/or reversing the tool movement and/or outputting a preferably optical and/or acoustic warning signal.

25. A computer program executing a method according to one of claims 10 to 24 when run in a control device (7) of a bending press (1) according to one of claims 1 to 9.

26. A machine-readable medium on which a computer program product with program code, which comprises a computer program according to claim 25, is stored.

## Revendications

1. Presse plieuse (1) pour le pliage d'une pièce (2), comprenant deux plateformes (3), mobiles l'une par rapport à l'autre, qui supportent chacune un porte-outil (4) qui maintient un outil (5), un dispositif de commande (7) et un capteur (6) relié avec le dispositif de commande (7), **caractérisée en ce que** l'au moins un capteur (6) est un capteur de pression disposé dans le flux principal des forces de la presse plieuse (1), qui interagit de préférence avec un des porte-outils (4) et **en ce que** le dispositif de commande (7) comprend un dispositif de traitement de données (8) qui est conçue pour déterminer, à partir des données de capteur du capteur de pression (6), au moins une propriété de la pièce (2) et/ou la déformation de la presse plieuse (1) provoquée par le processus de pliage et **en ce que** le capteur de pression (6) est disposé à l'intérieur du porte-outil (4) ou entre le porte-outil (4) et l'outil (5) maintenu par le porte-outil (4) ou entre le porte-outil (4) et la plateforme (3) supportant le porte-outil (4).

2. Presse plieuse selon la revendication 1, **caractérisée en ce que** l'au moins une propriété de la pièce (2) est l'angle de pliage réalisé par le processus de pliage et/ou l'épaisseur de la pièce (2).

3. Presse plieuse selon la revendication 1 ou 2, **caractérisée en ce que** le porte-outil (4) est un dispositif de serrage d'outil dans lequel l'outil (5), est serré et donc maintenu en position de préférence entre deux mâchoires de serrage ou barres de serrage.

4. Presse plieuse selon l'une des revendications précédentes, **caractérisée en ce que** le capteur de pression (6) est un capteur piézoélectrique.

5. Presse plieuse selon l'une des revendications précédentes, **caractérisée en ce que** le capteur de pression (6) repose dans un renfoncement (9) ou un évidement, plus particulièrement dans un renfoncement (9) ou évidement du porte-outil (4).

6. Presse plieuse selon l'une des revendications précédentes, **caractérisée en ce que** le capteur de pression (6) est entouré par le porte-outil (4) et n'est pas visible de l'extérieur au moins lorsque l'outil (5) est inséré dans le porte-outil (4).

7. Presse plieuse selon l'une des revendications précédentes, **caractérisée en ce que** la dimension de l'au moins un capteur de pression (6) est, dans une direction qui est perpendiculaire à la direction de la pression (10) et perpendiculaire à l'extension longitudinale du porte-outil (4), de préférence la moitié de la dimension du porte-outil (4) dans la même direction.

8. Presse plieuse selon l'une des revendications précédentes, **caractérisée en ce que** la presse plieuse (1) comprend au moins deux, de préférence plusieurs capteurs de pression (6), qui sont disposés de manière distante entre eux le long de l'extension longitudinale du porte-outil (4).

9. Presse plieuse selon l'une des revendications précédentes, **caractérisée en ce qu'**une plateforme (3) est constituée d'une table de machine et l'autre plateforme (3) est constitué d'une barre de pression et/ou **en ce qu'**un outil (5) est constitué d'un outil supérieur et l'autre outil (5) est constitué d'un outil inférieur, dans lequel, de préférence, un outil (5) est constitué d'une matrice et l'autre outil (5) est constitué d'un poinçon.

10. Procédé de pliage d'une pièce (2) avec une presse plieuse (1) selon l'une des revendications précédentes, **caractérisé par** les étapes suivantes : (a) réalisation d'un processus de pliage par un déplacement relatif l'un vers l'autre des outils (5) ; (b) mesure de la pression exercée par le processus de pliage et/ou de la pression avec le capteur de pression (6) ; et (c) détermination d'au moins une propriété de la pièce (2) et/ou de la déformation, provoquée par le processus de pliage, de la presse plieuse (1) à partir des données de capteur du capteur de pression (6).

11. Procédé selon la revendication 10, **caractérisé en ce qu'**une propriété de la pièce (2), déterminée à l'étape (c) est l'angle de pliage de la pièce (2) obtenu à l'aide du processus de pliage.

12. Procédé selon la revendication 10 ou 11, **caractérisé en ce qu'**une propriété de la pièce (2), déterminée à l'étape (c) est l'épaisseur de la pièce (2).

13. Procédé selon l'une des revendications 10 à 12, **caractérisé en ce que** la mesure de la force ou de la pression est effectuée en continu avec le capteur de pression (6) pendant l'ensemble du processus de pliage.

14. Procédé selon l'une des revendications 10 à 13, **caractérisé en ce que** la réalisation de l'étape (c) a lieu au moyen d'un algorithme (11), qui détermine, en fonction d'au moins une grandeur d'entrée, l'au moins une propriété de la pièce (2) et/ou la déformation de la presse plieuse (1), dans lequel, de préférence, l'algorithme (11) a recours à au moins un jeu de données enregistré (12) qui, à chaque valeur de l'au moins une propriété de la pièce (2) et/ou de la déformation de la presse plieuse (1), attribue une grandeur d'entrée ou une grandeur intermédiaire dérivée de l'au moins une grandeur d'entrée.

15. Procédé selon l'une des revendications 10 à 14, **caractérisé en ce que** l'algorithme (11) utilise, en plus des données de capteur du capteur de pression (6), la position relative des outils (5) entre eux, plus particulièrement la profondeur d'insertion, en tant que grandeur d'entrée pour la détermination de l'au moins une propriété de la pièce (2) et/ou de la déformation de la presse plieuse (1).

16. Procédé selon l'une des revendications 10 à 15, **caractérisé en ce que**, à l'étape (c), on détermine l'angle de pliage que présente la pièce (2) dans l'état sollicité par les outils (5).

17. Procédé selon l'une des revendications 10 à 16, **caractérisé en ce que**, à l'étape (c), on détermine l'angle de pliage que prend la pièce (2) pliée dans l'état relâché.

18. Procédé selon l'une des revendications 10 à 17, **caractérisé en ce que**, pour la détermination de l'angle de pliage dans l'état relâché de la pièce (2) pliée, on utilise la position relative des outils (5), plus particulièrement la profondeur d'insertion, dans laquelle la force ou la pression exercée par les outils (5) sur la pièce (2) tend vers zéro ou au moins un outil (2) perd le contact avec la pièce (2) pliée.

19. Procédé selon la revendication 18, **caractérisé en ce que** l'arrivée à cette position est constatée au moyen des données de capteur du capteur de pression (6).

20. Procédé selon l'une des revendications 10 à 19, **caractérisé en ce que** la presse plieuse (1) comprend au moins deux capteurs de pression (6) et **en ce que**, à partir des données de capteur de chacun des au moins deux capteurs de pression (6), est déterminé un angle de pliage.

21. Procédé selon l'une des revendications 10 à 20, **caractérisé en ce que** le contrôle du processus de pliage a lieu en fonction de la propriété déterminée de la pièce (2) et/ou de la déformation de la presse plieuse (1).

22. Procédé selon l'une des revendications 10 à 21, **caractérisé en ce que**, lors d'un écart entre l'angle de pliage déterminé et une valeur de consigne, la presse plieuse (1) exécute une action, plus particulièrement un affichage de l'écart et/ou de l'angle de pliage déterminé au niveau d'une interface d'affichage (13), plus particulièrement un écran, ou un enregistrement de l'écart et/ou de l'angle de pliage déterminé dans une mémoire (14).

23. Procédé selon l'une des revendications 10 à 22, dans lequel la presse plieuse est conçue selon la revendication 8, **caractérisé en ce que** la presse plieuse (1) comprend un dispositif de répartition des forces (15) pour l'application des forces en fonction de la position le long de la ligne de pliage (16), plus particulièrement un dispositif de roulage pour l'application ponctuelle d'une force et **en ce que** le contrôle du dispositif de répartition des forces (15) a lieu en fonction des données de capteurs des capteurs de pression (6) répartis le long de l'extension longitudinale du porte-outil (4).

24. Procédé pour le pliage d'une pièce avec une presse plieuse (1) selon l'une des revendications 10 à 23, **caractérisé par** les étapes suivantes : (a) réalisation d'un processus de pliage à l'aide d'un déplacement relatif l'un vers l'autre de deux outils (5) ; (b) mesure de la force et/ou de la pression exercée sur un outil (5) et/ou sur un porte-outil (4) qui maintient l'outil (5), avant, pendant et/ou après le processus de pliage avec au moins un capteur de force ou de pression (6) ; (d) analyse des données de capteur du capteur de pression (6) afin de détecter une collision indésirable d'un outil (5) ou d'un porte-outil (4) avec un outil (5) mal inséré, un objet ou une personne ; et (e) arrêt et/ou inversement du déplacement de l'outil et/ou affichage d'un signal d'avertissement, de préférence optique et/ou acoustique.

25. Programme informatique qui exécute un procédé selon l'une des revendications 10 à 24, lorsqu'il est tourne dans un dispositif de commande (7) d'une presse plieuse (1) selon l'une des revendications 1 à 9.

26. Support lisible par une machine, sur lequel est enregistré un produit de programme informatique avec un code de programme qui comprend un programme informatique selon la revendication 25.
